(19) Europäisches Patentamt / European Patent Office / Office européen des brevets

(11) **EP 3 080 933 B1**

(12) **EUROPEAN PATENT SPECIFICATION**

(45) Date of publication and mention
of the grant of the patent:
**12.02.2020 Bulletin 2020/07**

(51) Int Cl.:
***H04J 3/06*** (2006.01)

(21) Application number: **13815106.3**

(22) Date of filing: **09.12.2013**

(86) International application number:
**PCT/GB2013/053241**

(87) International publication number:
**WO 2015/087024 (18.06.2015 Gazette 2015/24)**

(54) **METHOD AND DEVICES FOR SYNCHRONIZATION USING LINEAR PROGRAMMING**

SYNCHRONISATIONSVERFAHREN UND -VORRICHTUNGEN MIT LINEARER PROGRAMMIERUNG

PROCÉDÉ ET DISPOSITIFS DE SYNCHRONISATION AU MOYEN D'UNE PROGRAMMATION LINÉAIRE.

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.10.2016 Bulletin 2016/42**

(73) Proprietors:
• **Khalifa University of Science and Technology**
  Abu Dhabi (AE)
• **British Telecommunications public limited company**
  London EC1A 7AJ (GB)
• **Emirates Telecommunications Corporation**
  Abu-Dhabi (AE)

(72) Inventor: **AWEYA, James**
  Abu Dhabi (AE)

(74) Representative: **J A Kemp LLP**
  14 South Square
  Gray's Inn
  London WC1R 5JJ (GB)

(56) References cited:
**US-A1- 2013 282 875**

• **BLETSAS A: "Evaluation of Kalman filtering for network time keeping", IEEE TRANSACTIONS ON ULTRASONICS, FERROELECTRICS AND FREQUENCY CONTROL, IEEE, US, vol. 52, no. 9, 1 September 2005 (2005-09-01), pages 1452-1460, XP011367468, ISSN: 0885-3010, DOI: 10.1109/TUFFC.2005.1516016**
• **SIVRIKAYA F ET AL: "TIME SYNCHRONIZATION IN SENSOR NETWORKS: A SURVEY", IEEE NETWORK, IEEE SERVICE CENTER, NEW YORK, NY, US, vol. 18, no. 4, 1 July 2004 (2004-07-01), pages 45-50, XP001220892, ISSN: 0890-8044, DOI: 10.1109/MNET.2004.1316761**
• **YIK-CHUNG WU ET AL: "Clock Synchronization of Wireless Sensor Networks", IEEE SIGNAL PROCESSING MAGAZINE, IEEE SERVICE CENTER, PISCATAWAY, NJ, US, vol. 28, no. 1, 1 January 2011 (2011-01-01), pages 124-138, XP011340309, ISSN: 1053-5888, DOI: 10.1109/MSP.2010.938757**
• **MOON S B ET AL: "Estimation and removal of clock skew from network delay measurements", INFOCOM '99. EIGHTEENTH ANNUAL JOINT CONFERENCE OF THE IEEE COMPUTER A ND COMMUNICATIONS SOCIETIES. PROCEEDINGS. IEEE NEW YORK, NY, USA 21-25 MARCH 1999, PISCATAWAY, NJ, USA,IEEE, US, vol. 1, 21 March 1999 (1999-03-21), pages 227-234, XP010323728, ISBN: 978-0-7803-5417-3**

## Description

Field of the Invention

The present invention relates to methods and devices for synchronization using linear programming. It is particularly, but not exclusively, concerned with time synchronization over packet networks using, for example, the IEEE 1588 Precision Time Protocol (PTP).

Background of the Invention

Packet technologies (e.g., Ethernet, IP) are fundamentally asynchronous, optimized for the bursty nature of data traffic, and provide no inherent timing transfer (frequency and time) capabilities. However, packet technologies like Ethernet are quickly replacing existing provider network infrastructures (widely based on time division multiplexing (TDM) technologies like PDH and SDH). This is due to the relatively higher bandwidths and low costs of packet networking devices, as well as to enhancements in Quality of Service (QoS), Operations, Administration and Maintenance (OA&M), congestion management, and resiliency.

One of the important capabilities missing from a total convergence to packet networking (with Ethernet currently being the technology of choice) is the ability to provide timing and synchronization natively within the network. This would provide Ethernet with the capability to transport time-sensitive applications (such as Circuit Emulation Services (CES) over packet) and to distribute precise frequency and time references.

Time and frequency synchronization plays a crucial role in mobile backhaul networks. Cellular base stations derive their carrier radio frequencies from a highly accurate reference clock, usually within 50 parts-per billion (ppb). This reference clock is typically derived from synchronous TDM interfaces or from expensive GPS receivers located at the base station. Without timing information traceable to a highly accurate Primary Reference Clock (PRC), local interference between channel frequencies, as well as mutual interference with neighboring base stations will occur, ultimately causing dropped calls and degrading the overall user experience. Each base station requires an accurate synchronization reference in order to prevent call drops during handoffs. Call handoffs during mobile client roaming also suffer perceptible delays when base station clocks are not sufficiently synchronized.

Mobile networks fall into two categories, Frequency Division Duplexing (FDD), which uses two separated frequency bands to transmit/receive, and Time Division Duplexing (TDD), which transmits and receives on a single frequency band. Time synchronization (in addition to frequency synchronization) is needed for LTE-TDD, WiMAX TDD, CDMA networks (popular in North America), and TD-CDMA and TD-SCDMA, while only frequency synchronization is required for LTE-FDD, GSM (global system for mobile communications), W-CDMA, and other wireless technologies. Even with the use of LTE-FDD, new LTE mobile services such as network MIMO and location-based services will demand accurate time synchronization.

In the case where clock transfers have to be done end-to-end with no assistance from the packet network (in the form of hop-by-hop Boundary Clocks (BCs) or Transparent Clocks (TCs)), there are no reference clocks traceable to a PRC at both ends of the packet network, or in the absence of a network-wide GPS service, a receiving timing-dependent terminal node has to use an adaptive timing technique to reconstruct the timing signal of the transmitting timing reference source. The receiving terminal source would commonly use a "packet-based" clock recovery mechanism that slaves the receiver clock to a transmitter clock. The clock recovery mechanism is able to process transmitted clock samples (timestamps) encoded within the packet data stream to generate timing signal for the receiver. The purpose of the clock recovery mechanism is to estimate and compensate for the frequency drift occurring between the oscillators of the transmitter clock and the receiver clock. However, the presence of packet delay variation (PDV) and packet losses affects the performance of the clock estimation/compensation process, making the transmitter clock appear faster or slower than it actually is, and ultimately, causing the propagation of mostly wander up to the receiver clock signal. (Wander is clock noise less 10 Hz while jitter is clock noise equal or greater than 10 Hz.)

IEEE 1588 PTP Message Flow

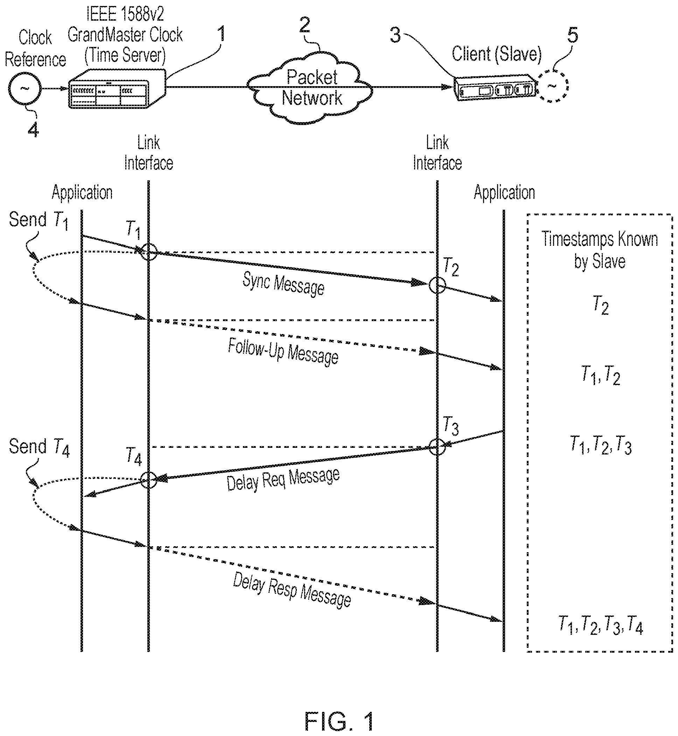

The IEEE 1588v2 PTP defines a packet-based synchronization protocol for communicating frequency, phase and time-of-day information from a master to one or more slaves with sub-microsecond accuracy. PTP relies on the use of accurately timestamped packets (at nanosecond level granularity) sent from a master clock to one or more slave clocks to allow them to (frequency or time) synchronize to the master clock. Synchronization information is distributed hierarchically, with a GrandMaster clock at the root of the hierarchy. The GrandMaster provides the time reference for one or more slave devices. These slave devices can, in turn, act as master devices for further hierarchical layers of slave devices. The PTP message exchange process (i.e., the PTP Delay Request/Delay Response flow) between a master 1 and a slave 3 is performed as follows and illustrated in Figure 1. IEEE 1588 PTP allows for two different types of timestamping methods, either one-step or two-step. One-step clocks update time information within event messages (Sync and Delay-Req) on-the-fly, while two-step clocks convey the precise timestamps of packets in general messages (Follow_Up and Delay-Resp). A Sync message is transmitted by a master 1 to its slaves 3 and either contains the exact time of its transmission or is followed by a Follow_Up message containing this time. In a two-step ordinary or boundary clock, the Follow_Up message communicates the value of the departure timestamp for a particular Sync message. Figure 1 illustrates the basic pattern of synchronization message exchanges for the two-step clocks. The master 1 sends a Sync message to the slave 3 over a network 2 and notes the time $T_1$ at which it was sent. The slave 3 receives the Sync message and notes the time of reception $T_2$. The master 1 conveys to the slave the timestamp $T_1$ by one of two ways: 1) Embedding the timestamp $T_1$ in the Sync message. This requires some sort of hardware processing (i.e., hardware timestamping) for highest accuracy and precision. 2) Embedding the timestamp $T_1$ a Follow_Up message as shown in Figure 1. Next, the slave 3 sends a Delay_Req message to the master 1 and notes the time $T_3$ at which it was sent. The master receives the Delay_Req message and notes the time of reception $T_4$. The master 1 conveys to the slave 3 the timestamp $T_4$ by embedding it in a Delay_Resp message.

At the end of this PTP messages exchange, the slave 3 possesses all four timestamps $\{T_1, T_2, T_3, T_4\}$. These timestamps may be used to compute the offset of the slave's clock 5 with respect to the master clock 4 and the mean propagation time of messages between the two clocks. The computation of offset and propagation time assumes that the master-to-slave and slave-to-master propagation times are equal - symmetrical communication path. Clock frequencies change over time, so periodic message exchanges are required. Because these clock variations change slowly, the period between message exchanges is typically on the order of milliseconds to seconds.

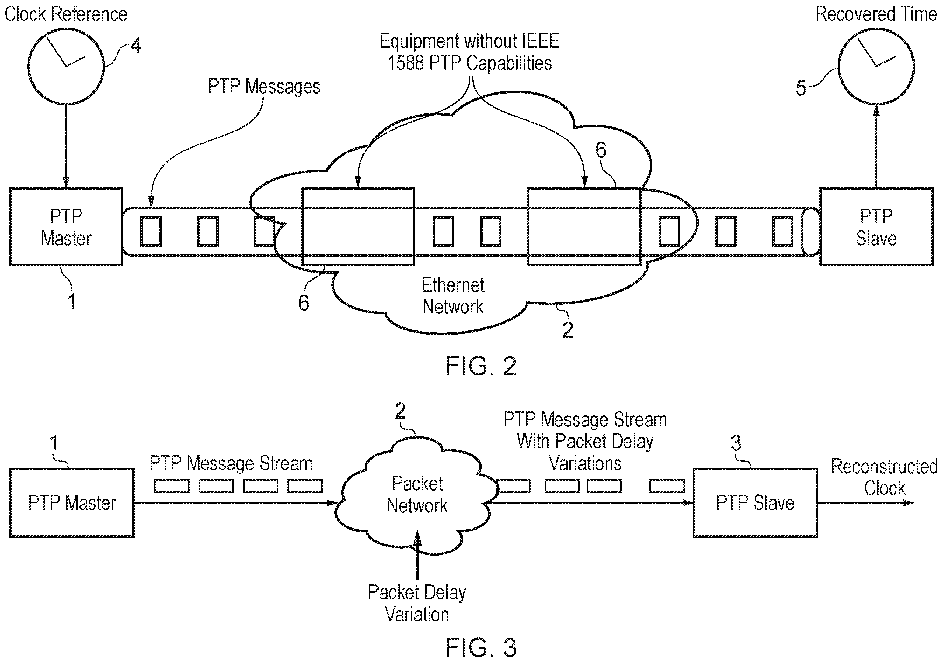

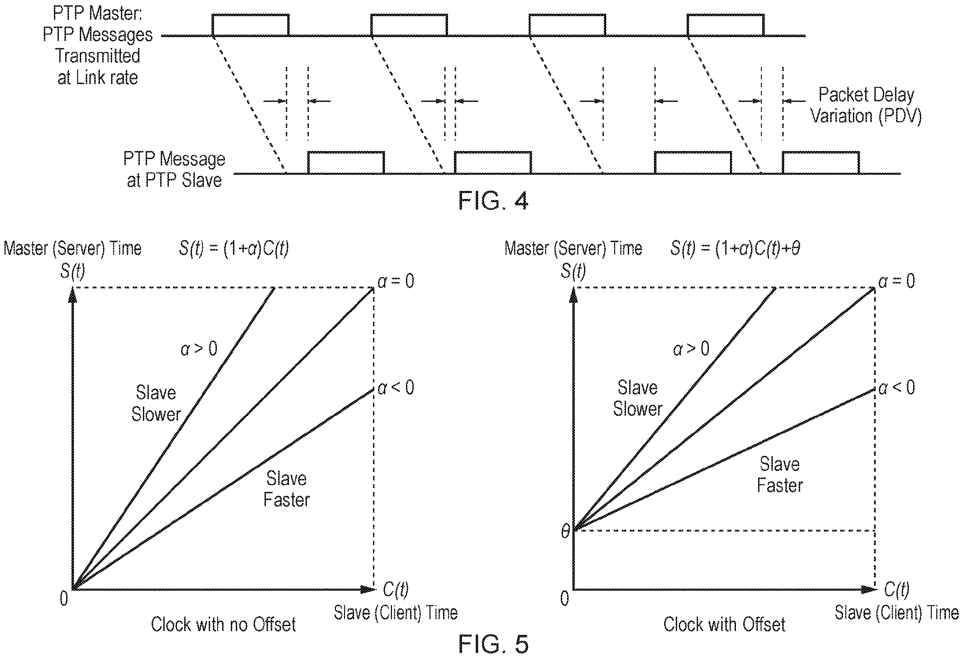

Time/frequency can be transferred in an end-to-end fashion from master 1 to slave 3 without involving the intermediate network nodes 6 as illustrated in Figure 2. In this scenario the slave 3 is solely responsible for correctly recovering the master clock signal. Compared to the other methods (e.g., using hop-by-hop Boundary Clocks or Transparent Clocks), time/frequency transfer here is more challenging because the slave 3 is exposed to all the PDV generated by the intermediate packet network 2 (as illustrated in Figure 3 and Figure 4). The processing and buffering of packets in network devices (switches, routers, etc.) introduce variations in the time latency of packets traversing the packet network 2 that tend to degrade the clock signal transferred. The PDV inherent in packet networks is a primary source of clock noise. The recovered clock from the PTP timing signal at the slave 3 contains clock noise (contributed largely by PDV) that needs to be removed or attenuated. A filtering process is used at the slave 3 to filter out the clock noise, thus generating a "smooth" clock output.

There are several clock synchronization techniques that estimate clock skew through linear regression, linear programming and convex hull methods. Specifically, [1] describes a number of methods one of which is a linear regression technique. The problem with linear regression algorithms is that they are usually not robust to presence of large outliers and thus only valid and work well for certain PDV models (e.g. Gaussian). A more complicated approach is proposed in [1][2] where a linear programming technique is used to estimate the clock skew in *one-way* network delay measurements. The technique shows improvement in performance compared to other existing algorithms. In [3][4] skew estimation is achieved through the computation of convex hull generated from *one-way* delay measurements. The authors claim that convex-hull approach provides better insight and handling of error metrics compared to linear regression or linear programming techniques. An extension of this technique is introduced by [5] where both the offsets and skew are estimated by a lower and upper convex hull approach that relies on using downstream (master to slave) and upstream (slave to master) delay measurements. Bletsas A. "Evaluation of Kalman filtering for network time keeping", IEEE Transactions on Ultrasonics, Ferroelectrics and Frequency Control, vol. 52, no. 9 pages 1452-1460 also discloses the use of linear programming to estimate the clock skew in one-way network delay measurements and then averages the estimate from each direction.

When clock synchronization is done in an end-to-end manner over a packet network, the timing protocol messages are exposed to packet network artifacts like packet delay variations (PDVs) and packet losses. The PDV inherent in packet networks is a direct contributor to the noise in the recovered clock at the end system.

An object of the present invention is to recover the master clock accurately at the slave in the face of all the PDV generated by the intermediate packet network. It is a further object of the present invention to achieve accurate and robust synchronization over IEEE 1588 for critical applications that require stringent synchronization margins.

## Summary of the Invention

At their broadest, slave devices of the present invention are arranged to synchronize a slave clock in the slave device to a master clock by solving a linear programming problem to derive an estimate of the skew and offset of the slave clock relative to the master clock.

A first aspect of the present invention provides a slave device according to appended claim 1.

The network is may be a packet network (using technologies such Ethernet, IP, MPLS, etc.). The timing messages are preferably timing messages under the IEEE 1588 Precision Time Protocol (PTP).

By using the linear programming approach set out above, accurate timing information (time and frequency) may be transported from a master (server) clock in an end-to-end fashion over a packet network and accurately recovered at the slave (client) device.

The slave device of this aspect requires no assistance from the packet network in its synchronization operation and is still able to provide sub-microsecond level clock accuracies. The slave device of this aspect uses a two-dimensional linear programming technique for estimating clock offset and skew from two-way timing message exchanges. This technique has the simplicity of the linear-programming technique using one-way delay measurements but the accuracy and robustness of the extended convex hull technique. The proposed linear programming technique for estimating the clock offset and skew of a slave clock with respect to a master clock does not require knowledge of the measurement and process noise statistics as in Kalman filtering based techniques.

Preferably the slave clock includes a local free-running oscillator and a skew-adjusted free-running counter driven by the output of said local free-running oscillator, and the slave device is arranged to synchronize the frequency of the slave clock to the frequency of the master clock by adjusting the skew-adjusted free-running counter to take account of the estimated skew and applying the estimated offset to the output of the skew-adjusted free-running counter to produce the master time estimate.

Preferably the slave device has a memory area storing a signed skew compensation factor derived from said estimate of the skew which is added to the skew-adjusted free-running counter at each clock cycle of the local free-running oscillator.

By adding (or subtracting, where the sign is negative) the skew compensation factor to the skew-adjusted free-running counter at each clock cycle, the counter evolution can follow the computed server time estimate. With the adjustment of the counter increments, the evolution of the skew-adjusted free-running counter can provide both a time signal and a frequency signal.

More preferably the skew compensation factor is an adjustment factor representing a fractional nanosecond adjustment to be applied to the skew-adjusted free-running counter. This allows for highly accurate adjustment of the counter to account for the minor effects of the skew in terms of parts per million (ppm).

In some embodiments, the skew-adjusted free-running counter is also used to provide timestamps for the time of receipt and of sending of timing messages at/from the slave device.

In these embodiments the counter may be initialized on receipt by the slave device of the first timing message from the master device, and the counter is reset on receipt of the first master time estimate to said first master time estimate.

In alternative embodiments the slave device further comprises a second free-running counter driven by the output of the local free-running oscillator, wherein the second counter is used to provide timestamps for the time of receipt and sending of timing messages at/from the slave device.

In preferred embodiments, the slave device further includes a first programmable register storing scheduled event times and a comparator, wherein the comparator is arranged to compare the master time estimate to the event times stored in said register and produce an output signal when there is a match.

This can provide for a highly accurate timing pulse signal for scheduled events.

In a development of the above embodiments the slave device includes a second programmable register storing an event period and is arranged to produce a pulsed output signal by incrementing a scheduled event time stored in said first programmable register by the event period stored in said second programmable register each time a match is found by the comparator.

In this development a highly accurately spaced pulse train can be generated which can be used as a digitally synthesized clock signal of programmable frequency (the frequency being determined by the stored event period).

Such a pulse train or clock signal, particularly when both registers store times to a fractional nanosecond level, can be used to synthesize a highly accurate clock signal which is a non-integer factor of the local oscillator frequency. For example, reference frequencies for telecom systems may be generated by this technique.

Preferably the pulsed output of the comparator is conditioned using a phase locked loop to reduce the jitter in the output. Some jitter in the pulse train output is inevitably produced by the quantization introduced by the local oscillator clock steps. If this inherent jitter is too large, then the quality of the clock signal output from the comparator may not satisfy the end application requirements. In such circumstances a phase locked loop may be used to condition the signal.

Further operations may be carried out on the output pulse train to construct a suitable clock signal for the end application, for example to create square wave or sine wave formats.

The slave device of this aspect preferably operates by carrying out the relevant steps of a method according to the second aspect described below.

The slave device of the present aspect may include any combination of some, all or none of the above described preferred and optional features.

At their broadest, methods of the present invention aim to synchronize a slave clock in the slave device to a master clock by solving a linear programming problem to derive an estimate of the skew and offset of the slave clock relative to the master clock.

A second aspect of the present invention provides a method according to appended claim 8.

The network is may be a packet network (using technologies such Ethernet, IP, MPLS, etc.). The timing messages are preferably timing messages under the IEEE 1588 Precision Time Protocol (PTP).

By using the linear programming approach set out above, accurate timing information (time and frequency) may be transported from a master (server) clock in an end-to-end fashion over a packet network and accurately recovered at the slave (client) device.

The method of this aspect requires no assistance from the packet network in its synchronization operation and is still able to provide sub-microsecond level clock accuracies at the slave device.

The method of this aspect uses a two-dimensional linear programming technique for estimating clock offset and skew from two-way timing message exchanges. This technique has the simplicity of the linear-programming technique using one-way delay measurements but the accuracy and robustness of the extended convex hull technique. The proposed linear programming technique for estimating the clock offset and skew of a slave clock with respect to a master clock does not require knowledge of the measurement and process noise statistics as in Kalman filtering based techniques.

Preferably the slave clock includes a local free-running oscillator and a skew-adjusted free-running counter driven by the output of said local free-running oscillator, and the step of synchronizing includes the steps of: synchronizing the frequency of the slave clock to the frequency of the master clock by adjusting the skew-adjusted free-running counter to take account of the estimated skew and applying the estimated offset to the output of the skew-adjusted free-running counter to produce the master time estimate.

Preferably the method further includes the steps of: storing a signed skew compensation factor derived from said estimate of the skew in a memory area; and adding said compensation factor to the skew-adjusted free-running counter at each clock cycle of the local free-running oscillator.

By adding (or subtracting, where the sign is negative) the skew compensation factor to the skew-adjusted free-running counter at each clock cycle, the counter evolution can follow the computed server time estimate. With the adjustment of the counter increments, the evolution of the skew-adjusted free-running counter can provide both a time signal and a frequency signal.

More preferably the skew compensation factor is an adjustment factor representing a fractional nanosecond adjustment to be applied to the skew-adjusted free-running counter. This allows for highly accurate adjustment of the counter to account for the minor effects of the skew in terms of parts per million (ppm).

In some embodiments, the skew-adjusted free-running counter is also used to provide timestamps for the time of receipt and of sending of timing messages at/from the slave device.

In these embodiments the method may further include the steps of initializing the counter on receipt by the slave device of the first timing message from the master device, and resetting the counter to said first master time estimate on receipt of the first master time estimate.

In alternative embodiments the slave device further comprises a second free-running counter driven by the output of the local free-running oscillator, wherein the second counter is used to provide timestamps for the time of receipt and sending of timing messages at/from the slave device.

In preferred embodiments, the slave device further includes a first programmable register storing scheduled event times and the method further includes the steps of comparing the master time estimate to the event times stored in said register and producing an output signal when there is a match.

In a development of the above embodiments, the slave device includes a second programmable register storing an event period and the method further includes the step of incrementing a scheduled event time stored in said first programmable register by the event period stored in said second programmable register each time a match is found by the comparator to produce a pulsed output signal.

This can provide for a highly accurate timing pulse signal for scheduled events.

In this development a highly accurately spaced pulse train can be generated which can be used as a digitally synthesized clock signal of programmable frequency (the frequency being determined by the stored event period).

Such a pulse train or clock signal, particularly when both registers store times to a fractional nanosecond level, can be used to synthesize a highly accurate clock signal which is a non-integer factor of the local oscillator frequency. For example, reference frequencies for telecom systems may be generated by this technique.

Preferably the pulsed output of the comparator is conditioned using a phase locked loop to reduce the jitter in the output. Some jitter in the pulse train output is inevitably produced by the quantization introduced by the local oscillator clock steps. If this inherent jitter is too large, then the quality of the clock signal output from the comparator may not satisfy the end application requirements. In such circumstances a phase locked loop may be used to condition the signal.

Further operations may be carried out on the output pulse train to construct a suitable clock signal for the end application, for example to create square wave or sine wave formats.

The method of the present aspect may include any combination of some, all or none of the above described preferred and optional features.

The methods of the above aspect is preferably implemented by a slave device according to the first aspect of this invention or in a system according to the third aspect of this invention, as described below, but need not be.

Further aspects of the present invention include computer programs for running on computer systems which carry out the methods of the above aspect, including some, all or none of the preferred and optional features of that aspect.

At their broadest, systems of the present invention are arranged to synchronize a slave clock in the slave device to a master clock in a master device by solving a linear programming problem to derive an estimate of the skew and offset of the slave clock relative to the master clock

Brief Description of the Drawings

Embodiments of the invention will now be described by way of example with reference to the accompanying drawings in which:

Figure 1 shows the message flow in a two-step clock under IEEE 1588 PTP and has already been described;

Figure 2 shows end-to-end time/frequency transfer over a network and has already been described;

Figure 3 shows, in schematic form, the effect of Packet Delay Variation in a packet network and has already been described;

Figure 4 shows the effects of Packet Delay Variation on a PTP message stream and has already been described;

Figure 5 shows simple models of the effect of clock skew on clocks with and without offset;

Figure 6 shows the behaviour of master and slave clocks with respect to a true (reference) time source;

Figure 7 shows the processing carried out by a slave device according to an embodiment of the present invention;

Figure 8 illustrates the two constraints in the linear programming formulation according to an embodiment of the present invention;

Figure 9 shows the process for estimation of server time at the slave device;

Figure 10 shows the architecture of a slave device according to an embodiment of the present invention;

Figure 11 shows an implementation of the steps of slave time offset and skew adjustment using a skew-adjusted free-running counter according to an embodiment of the present invention;

Figure 12 shows the operation of the skew-adjusted free-running counter of Figure 11;

Figure 13 illustrates the underlying synchronization between master and slave;

Figure 14 shows the method of generating a pulse train using precise scheduled events timing according to an embodiment of the present invention;

Figure 15 shows the implementation of the method of Figure 14; and

Figure 16 shows the process of precise pulse train generation with a clean-up phase locked loop.

Detailed Description

*Basic Clock Model*

In order to understand the embodiments below, a *generalized* clock offset and skew equation for our synchronization problem needs to be defined. Firstly, some terminology used to describe clock behavior is set out:

- **Clock:** To take into account the restrictions of real clocks, clocks are modeled as *piecewise continuous, strictly monotonic increasing functions.* A clock is a function that is twice differentiable except on a finite set of points:

$F : \Re \to \Re$ where $F'(t) \equiv dF(t)/dt$ and $F''(t) \equiv d^2F(t)/dt^2$ exists everywhere except for $t \in P \subset \Re$ where $|P|$ is finite. A typical hardware clock consists of a quartz crystal oscillator and a counter that is incremented by one every oscillation period (e.g., upon detection of a falling or rising edge). If the period $T$ of the oscillator is known, the counter $F$ can be used to obtain approximate measurements of real-time intervals in multiples of $T$. More formally, the clock counter displays the value $F(t)$ at real time $t$ and is incremented by one at a frequency $f = 1/T$. The rate of the clock counter is defined as $f(t) = dF(t)/dt$.

In some computer systems, abrupt time adjustment is made possible through a time resetting system call. The piecewise nature of the clock function accommodates the abrupt time adjustment.

- **"True" Clock:** An "true" clock is a reference clock that generates "true" time at any moment, and runs at a constant rate. Let $F_t$ denote the "true" clock and it is given by the identity function $F_t = t$ and $P_t = 0$.

- **Local Clock:** A *local clock* is a physical clock device, modeled as a function $G : \Re \to \Re$. In general, the notion of the local clock is used to refer to the local clock of the time client. The single local clock of the time client is denoted as $C = L_{clock}$ (free-running hardware clock). We denote $S$ as the server clock.

- **Logical Clock:** A *logical clock* is a function $H : \Re \to \Re$. It is a virtual clock, realized most often in software on a device that has a local clock. The notation $H(L_{clock})$ is used to denote the logical time that occurs at local time $L_{clock}$. Note that the argument of the logical clock function always is a local time. The estimate of the server time at the client at local clock time $L_{clock}$ is denoted as $\hat{S}(L_{clock})$.

- **Timestamp:** A clock whether physical or virtual can be used to associate an event with time. The time of a single event is called a *timestamp* and is a real number.

- **Offset:** Consider the time server and time client clocks, *S and C,* respectively. The difference or *offset* between the time reported by the clock S and the "true" time is $(S(t) - t)$. The offset of the clock S *relative* to C at time $t \geq 0$ is $\theta(t) = (C(t) - S(t))$; this is called *relative offset*.

- **Frequency:** This is the rate at which a clock progresses. The frequency at time $t$ of $S$ is $S'(t)$.

- **Skew:** This is the difference in the frequencies of a clock and the "true" clock. The skew of $S$ *relative* to $C$ at time $t \geq 0$ is $\alpha(t) = (C'(t) - S'(t))$; this is called *relative skew.*
An ideal (or "true") clock would have a rate of 1 at all times. However, the period of the oscillator and hence the clock rate depend on various parameters such as the manufacture (the cut), aging of the crystal, supply voltage, environmental temperature and humidity, vibration and/or shock. The effects of these factors can, however, be minimized by the quality and type of the oscillator (e.g., oven or double oven compensated oscillator, pre-aging, and oscillator characterization). Taking the client clock $C$, for instance, the skew is formally defined as the deviation of the rate from 1 or $\alpha_c(t) = (C'(t) - 1)$. Since network devices are typically operated under well-defined ranges of the above parameters, it is reasonable to assume a maximum skew $\alpha_{c\,max}$, such that $|\alpha_c(t)| = \alpha_{c\,max}$ for all $t$. Typical values for $\alpha_{c\,max}$ are 1 ppm to 100 ppm, where 1 ppm (parts per million) = $10^{-6}$.
*Note:* Two clocks are said to be synchronized at a particular moment if both the relative offset $\theta$ and skew $\alpha$ are zero. In this document the relative offset and relative skew will be referred to as simply offset and skew, respectively.

- **Drift:** The drift of clock $S$ is $S''(t)$. The drift of $S$ *relative* to $C$ at time $t \geq 0$ is $\mu(t) = (C''(t) - S''(t))$.

- **Clock Ratio:** Another useful parameter for describing clock behavior is the clock ratio. This is defined as the ratio of the frequencies of two clocks. The frequency ratio between a clock $C$ and the true clock is $C'(t)/1$. The ratio $\gamma$ of $C$ relative to $S$ at time $t$ is $C'(t) / S'(t)$. The relationship between the clock ratio and the skew is:

$$\alpha(t) = C'(t) - S'(t) = \gamma S'(t) - S'(t) = (\gamma - 1)S'(t)$$

- **Clock Resolution:** This is the smallest unit greater than zero by which the clock's time is updated (also called the *tick*). The accuracy of delay measurements is limited by the resolution of the clocks of the two end-systems.
In reality, a clock is step function with increments at every unit of its time resolution. However, in modeling clocks, the time reports by a real clock with fixed minimum resolution are considered as samples of a continuous function at specific moments, thus circumventing the discretization effect of the real clock.

Finally there are two terms that are used in describing clock behavior and quality:

- **Jitter:** Timing jitter is the short term variation of a digital signal's significant instant from their ideal positions in time, where short term implies phase oscillations of frequency greater than or equal to 10 Hz. Significant instants include for instance, optimum sampling instants.

- **Wander:** Long term variations, where the variations are of frequency less than 10 Hz, are called wander.

It is assumed that at any particular time instant, the instantaneous view of the relationship between the master (server) clock with timeline $S(t)$ and the slave (client) clock with timeline $C(t)$, can be described by the well-know simple skew clock model depicted in Figure 5, and described by the equation,

$$S(t) = (1+\alpha)C(t) + \theta , \qquad (1)$$

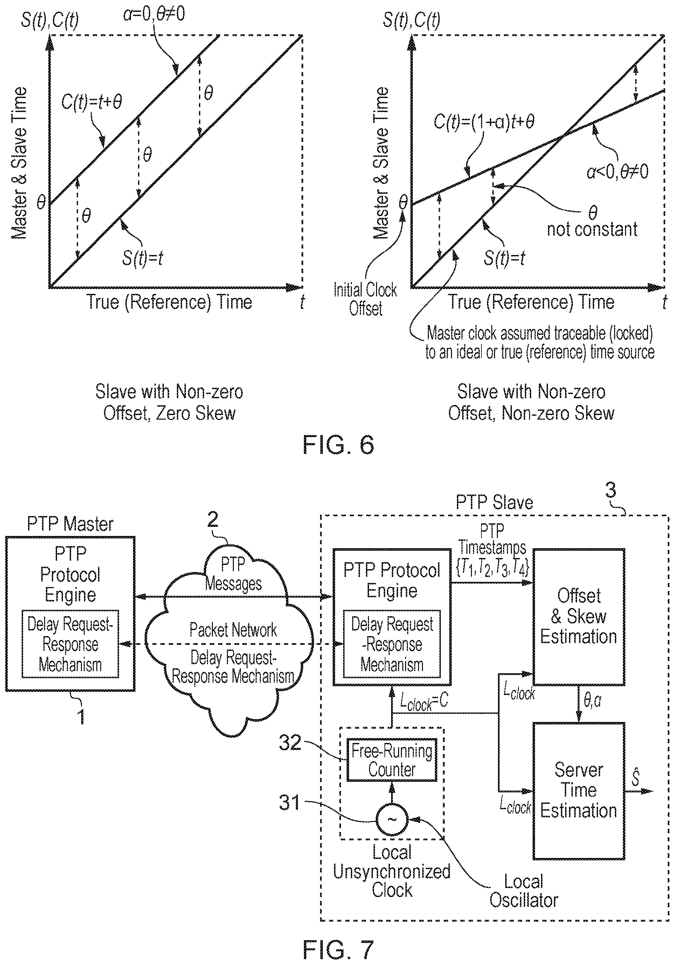

where the skew $\alpha$ is a very small quantity in the order of parts-per-million. This snapshot is an instantaneous view of how well the two clocks are (mis)aligned. Figure 5 illustrates the influence of $\theta$ and $\alpha$ on the alignment. The relationship between the master and slave clocks with respect to the true (reference) time source is shown in Figure 6.

The above equation can be extended to account for the case where the master clock and slave clock exchange messages over a communication link with delay. Assuming that the nth Sync message travelling from a master to a slave experiences a (fixed plus variable or stochastic) delay of $d_{f,n}$. Similarly, it is assumed the nth Delay_Req message sent from the slave to the master experiences a (fixed plus variable or stochastic) delay of $d_{r,n}$. It is further assumed that the fixed delay components in both directions are equal (symmetric communication paths) but the messages experience variables delays such queuing delays. The master and slave exchange messages using the delay-request delay-response mechanism described in Figure 1.

For the nth Sync message (Figure 1) which departs the master with timestamp $T_{1,n} \in S(t)$ and arrives at the slave with timestamp $T_{2,n} \in C(t)$ after having experienced a delay $d_{f,n}$, the simple skew clock model above can be extended to account for the travel time $d_{f,n}$ to obtain the following expression

$$(T_{1,n} + d_{f,n}) = (1+\alpha)T_{2,n} + \theta_f , \qquad (2)$$

where $\theta_f$ is the offset derived from Sync message transfers. For the nth Delay_Req message which departs the slave with timestamp $T_{3,n} \in C(t)$ and arrives at the master with timestamp $T_{4,n} \in S(t)$ after having experienced a delay $d_{r,n}$, the following expression is obtained

$$(T_{4,n} - d_{r,n}) = (1+\alpha)T_{3,n} + \theta_r , \qquad (3)$$

where $\theta_r$ is the offset derived from Delay_Req message transfers.

Below a two-dimensional (i.e., two-variable) linear programming technique according to an embodiment of the present invention for computing offset $\theta$ and $\alpha$ when given $N$ number of Sync and Delay_Req message exchanges is set out.

*2-Dimensional Linear Programming Technique for Clock Offset and Skew Estimation*

Figure 7 shows the main blocks of the synchronization technique according to an embodiment of the present invention at the time client 3. A free running local oscillator 31 is used together with the estimated clock parameters to synthesize a synchronized local clock 5 which is an estimated image of the server clock 4. The frequency of this client's local oscillator 31 is not adjusted, but it is allowed to free-run. This free running counter 32 is used for timestamping and for synthesizing an image of the server clock (synchronized local clock) for the time client. The timestamps indicated in Figure 7 at the client are with respect to this local clock.

From equation (2), we get the following expressions for the nth Sync (downstream) message flows

$$T_{1,n} \le (1+\alpha)T_{2,n} + \theta_f \qquad (4)$$

from which the boundary of the cloud of downstream timestamps is

$$T_{1,n} = (1+\alpha)T_{2,n} + \theta_f \qquad (5)$$

which is of the form

$$y = (1+\alpha)x + \theta_f \qquad (6)$$

where $y \in T_{1,n}, T_{4,n} \in S(t)$ and $x \in T_{2,n}, T_{3,n} \in C(t)$. The cloud of downstream timestamps generated as a result of path propagation delay and queuing delays can lie (or spread) below this line but the "true" *line* relating master and slave clocks must NOT. This means, the line relating the master and slave clocks, must lie ON or ABOVE this boundary (line). This results in the following constraint for the downstream cloud

$$T_{1,n} \geq (1+\alpha)T_{2,n} + \theta_f \qquad (7)$$

or

$$y \geq (1+\alpha)x + \theta_f \qquad (8)$$

From (3), we get the following expression for the nth Delay_Req (upstream) message flows

$$T_{4,n} \geq (1+\alpha)T_{3,n} + \theta_r \qquad (9)$$

which also produces the boundary of the cloud of upstream timestamps as

$$T_{4,n} = (1+\alpha)T_{3,n} + \theta_r \qquad (10)$$

which is also of the form

$$y = (1+\alpha)x + \theta_r \qquad (11)$$

Here too, the cloud of upstream timestamps generated as a result of path propagation delay and queuing delays can lie above this line but the "true" *line* relating master and slave clocks must NOT. The line relating the master and slave clocks, must lie ON or BELOW this boundary (line). This results in the following constraint for the downstream cloud

$$T_{4,n} \leq (1+\alpha)T_{3,n} + \theta_r \qquad (12)$$

which is also of the form

$$y \leq (1+\alpha)x + \theta_r \qquad (13)$$

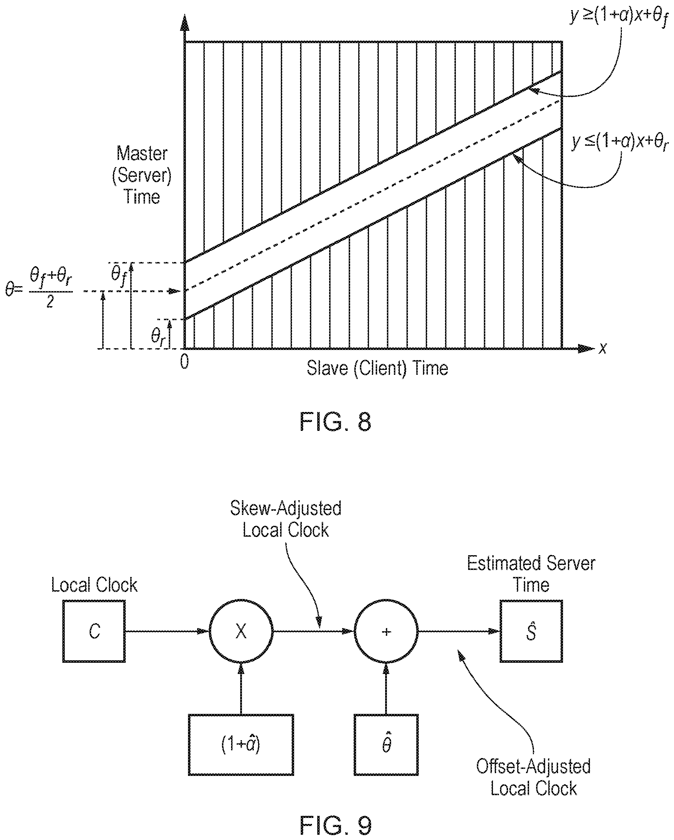

The two constraints (7) and (12) are illustrated in Figure 8. These two constraints can be interpreted as the constraints of a linear program which suggests a line (dashed line in Figure 8) that separates the downstream cloud of timestamps and upstream cloud of timestamps. The clock offset parameters $\theta_f$ and $\theta_r$ ideally should be the same or extremely close together since they relate to the same clocks (master and slave). We are therefore trying to find the smallest corridor (defined by the constraints (7) and (12)) that gives us the smallest difference between $\theta_f$ and $\theta_r$. The idea here is to estimate parameters that will make the two parallel lines in Figure 8 as close together as possible, that is, make the lane between these two lines as small as possible. The estimation algorithm strives to identify the two parallel lines $y = (1+\alpha)x + \theta_f$ (line bordering the downstream cloud) and $y = (1+\alpha)x + \theta_r$ (line bordering upstream cloud) with the condition that $\theta_f - \theta_r$ is minimized to allow the two lines to fit just at the edge of the two clouds.

A linear programming formulation that seeks to place these two parallel lines as wide apart as possible is as follows.

$$\text{Minimize } \theta_f - \theta_r$$

s.t.

$$T_{1,n} \geq (1+\alpha)T_{2,n} + \theta_f, \quad n \in \{1,2,\ldots,N\}, \tag{14}$$

$$T_{4,n} \leq (1+\alpha)T_{3,n} + \theta_r, \quad n \in \{1,2,\ldots,N\},$$

$$\theta_f - \theta_r \geq 0.$$

There are efficient methods (including off-the-shelf linear time algorithms) available for solving two-dimensional linear programming problems such as the above. The skew $(1 + \alpha)$ and the offset parameters $\theta_f$ and $\theta_r$ can easily be solved for from which the slave clock offset from the master $\theta$ can be calculated

$$\theta = \frac{\theta_f + \theta_r}{2} \tag{15}$$

The skew and offset can then be used to compute the server time estimate as illustrated in Figure 9. A hardware-based method for synthesizing at the slave time and frequency signals that are synchronized to the master according to an embodiment of the invention is set out below.

*Proposed Clock Recovery Architecture*

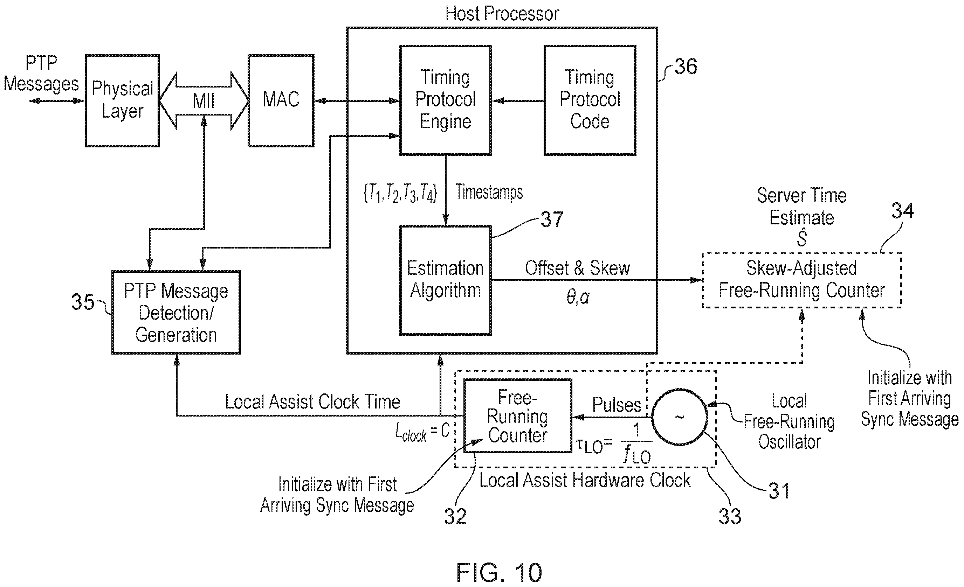

The clock offset $(\hat{\theta})$ and skew $(\hat{\alpha})$ estimated at the client using the two-dimensional linear programming technique over multiple periods of the Sync message broadcast is used to compute the server time $\hat{S}$ as illustrated in Figure 9. Figure 10 shows the main blocks of the proposed synchronization technique at the time client. A free running local client oscillator 31 is used together with the estimated clock offset and skew to derive the server clock estimate $\hat{S}$. The offset and skew are applied to the local free-running clock 33 (local assist hardware clock) in order to arrive at a local time value that is synchronized to the master clock 4.

The free-running counter 32 (i.e., local assist hardware clock) is used for timestamping PTP messages, computing clock offsets and skews, and generating the recovered clock signals.

The free-running counter 32 runs on the local system clock, asynchronously to the master clock 4 or clocks maintained by the other clients of the PTP network. Figure 10 also includes an offset and skew-adjusted free-running counter 34 (simply called skew-adjusted free-running counter) that can be adjusted with correction or compensation factors derived from the computed skew and offset so that it can be synchronized to the master clock 4. Both free-running counters are driven from a common local reference oscillator but with one counter providing raw time for timestamping, offset and skew computation, while the other which is adjustable, provides a time synchronized to the master. The PTP time value consists of a 32-bit nanoseconds field and a 48-bit seconds field. At each rollover of the nanoseconds [31:0] field ($10^9$ nanoseconds or 1 second), the 48-bit seconds [47:0] counter is incremented.

The message detection/generation block 35 performs timestamping of PTP messages and passes this information to the host processor 36. The estimation algorithm 37 running on the host processor 36 uses the information in the PTP messages to compute the skew, offset and server time estimate. If the system does not require a continuous synchronized clock signal output, the skew and offset adjustments can be performed purely in software. The PTP application must maintain its own free-running clock and perform skew and offset adjustments in software based on the slave values it calculates from each PTP message. Mobile base stations, for example, will require continuous synchronized clock signals, which means the system must provides the necessary logic to perform hardware-based skew and offset adjustments to the local clock 33. This requires a hardware skew and offset adjustment functionality and also functionality to provide a hardware synchronized time-of-day value and to synthesize a clock signal for use externally by end applications.

The idea of having a skew-adjusted free-running counter 34 can be explained as follows. If the observation of slave offset values calculated from the PTP messages tend to increase or decrease over time, then it means the local reference oscillator 31 that increments the free-running counter 32 is operating at a rate slightly slower or faster than the master clock 4. This implies that a skew adjustment can be made to the free-running counter 32 by slightly increasing or decreasing the rate at which the counter increments. Providing such appropriate adjustments locks the frequency of the counter 32 to the master clock 4.

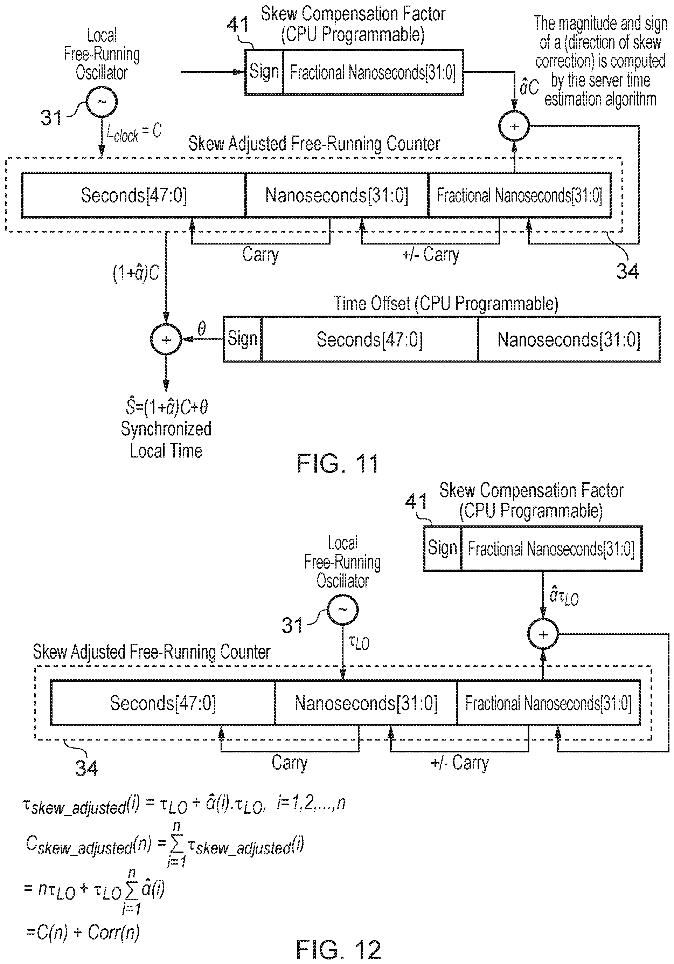

Figure 11 shows an implementation of the skew-adjusted free-running counter 34 according to one embodiment of the present invention. As explained below, the architecture in Figure 10 can be implemented either with two counters (i.e., a local free-running counter ((local assist hardware clock) plus a skew-adjusted counter) or with a single counter providing both functionalities (a skew-adjusted counter only).

It is assumed that the slave operates on a 125 MHz local reference clock, meaning the increment step is 8 ns each cycle or clock tick. The host processor 36 computes the skew and offset adjustment for the skew-adjusted free-running clock 34 based on the trend of slave clock and received PTP messages. The skew adjustment portion of the skew-adjusted free-running counter 34 can be implemented with a signed 32-bit fractional nanosecond counter portion (as shown by the fractional nanosecond portion in the counter 34 in Figure 11 and Figure 12), providing highly granular adjustments to the skew-adjusted free-running counter increment rate.

At each 125 MHz clock cycle, a programmable skew compensation factor 41 is added to or subtracted from the fractional nanosecond counter. If the fractional nanosecond counter rolls over or under, the skew-adjusted free-running counter 34 is incremented or decremented respectively. Since the skew-adjusted free-running counter 34 always increments by 8 ns at every 125 MHz cycle, the skew adjustment results in the skew-adjusted free-running counter effectively being incremented by 9 ns or 7 ns at a periodic interval determined by the skew computed by the host processor 36. This skew adjustment allows for very fine-grained control on the rate at which the free-running counter 34 increments, thereby enabling highly precise synchronization to the master clock 4.

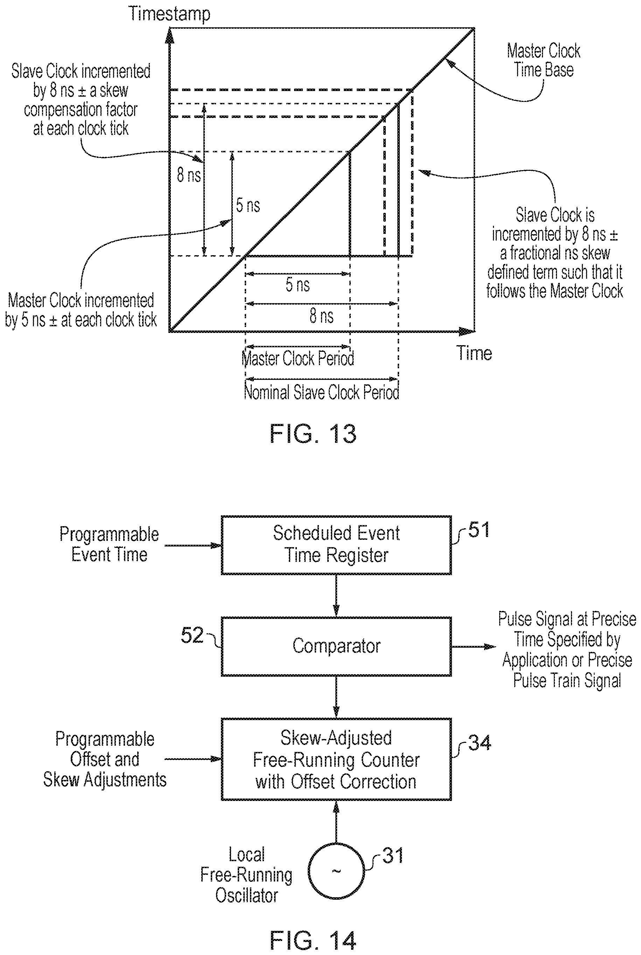

In the technique (Figure 10, Figure 11 and Figure 12), at each local clock cycle, the skew-adjusted free-running counter 34 is incremented by the nominal period of the clock (e.g., 8 ns for a 125 MHz nominal output frequency). If the estimated skew is $\hat{\alpha}$ = +10ppm, for example, then the skew compensation factor written into the fractional nanosecond portion of the counter 34 (Figure 12) every local clock period is $\hat{\alpha} \cdot \tau$ = 8 ns × 10ppm = +0.00008 ns. The skew-adjusted free-running counter 34 is adjusted in such a way that the counter evolution follows the computed server time estimate as illustrated in Figure 13. As illustrated in Figure 13, the adjustment of the increment (controlled by the computed skew) is carried out such that the increment falls along the master clock time base. With correct adjustment of the counter increments, the evolution of the counter provides both a time signal and frequency signal as explained below.

The architecture in Figure 10 can be implemented with either two separate counters (the local free-running counter 31 (i.e., local assist hardware clock) and skew-adjusted free-running counter 34) or one counter (skew-adjusted free-running counter 34 only). Both architectures can be used to synthesize time and frequency signals:

- **Architecture with separate counters (local free-running counter 31 and skew-adjusted free-running counter 34):** The initialization of these counters are done as follows:

  ○ *Local Free-Running Counter 31:* This counter is used only for timestamping PTP messages. It can be initialized with first arriving Sync message at the slave. Its initial value can also be user configured.

  ○ *Skew-Adjusted Free-Running Counter 34:* This counter provides a continuous time signal for the slave locked to master. It is initialized with the first arriving Sync message and thereafter, it is tuned with the skew and offset computed by slave.

- **Architecture with one counter (skew-adjusted free-running counter 34 only):** In this configuration, the skew-adjusted free-running counter 34 serves both as a timestamping counter as well as a counter that provides a continuous time signal for the slave. Initialization is carried out as follows:

  ○ The skew-adjusted free-running counter 34 is initialized with first arriving Sync message. This can also be a user configured initial value.

  ○ Skew-adjusted free-running counter readings now used to timestamp subsequent PTP messages.

  ○ First offset and skew are computed and skew-adjusted free-running counter adjusted to reflect these first clock parameter estimates. Skew-adjusted free-running counter readings used to timestamp subsequent PTP messages.

  ○ Subsequent periodic offset and skew estimates are computed and skew-adjusted free-running counter adjusted accordingly. Skew-adjusted free-running counter continues to provide slave reference signal locked to master. The counter continues to be used for timestamping PTP messages.

  ○ Once the clock skew has been computed and compensated for correctly, the slave clock offset should remain fairly constant at each update interval. Ideally, once the skew is properly compensated and an offset is computed and applied, the offset is only rarely changed. If the skew adjustment is properly tuned, the offset programmed into the counter offset adjustment block should be a constant value. The offset adjustment logic simply adds or subtracts a constant value from the skew-adjusted portion of the counter. The offset is applied to the skew compensated local time to synchronize the local time with the master's.

Both architectures allow a PTP slave clock 5 to use the skew and offset adjusted counter to generate a usable clock signal for end applications. With correct skew and offset estimates, each slave free-running counter is both frequency and time-of-day locked to the master clock. The master clock device 4 only communicates timing information to each of its slave clock devices to align its clock signal. The slave clock 5 uses the free-running clock and the timing information to generate a frequency and phase aligned clock signal traceable to the master clock as illustrated in Figure 14, Figure 15 and Figure 16.

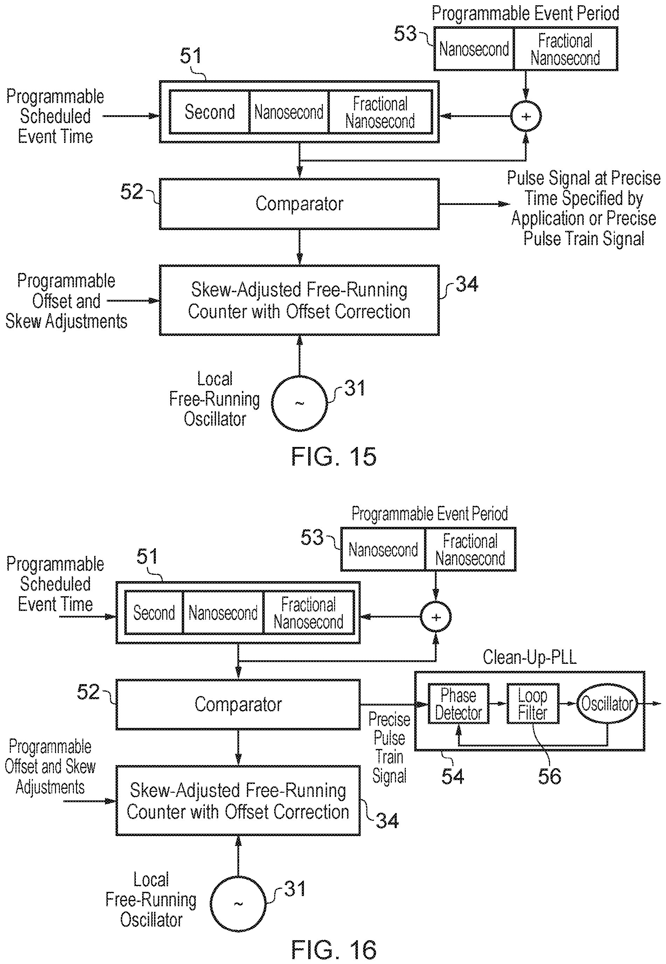

The skew-adjusted free-running counter 34 output can be used to schedule a pulse at a precise future time, for example, for event scheduling. It can also be used to generate a pulse train as illustrated in Figure 14 and Figure 15. For this, the scheduled event time is loaded into a coincidence register (scheduled event register 51) and when the skew-adjusted free-running counter 34 agrees with the register value as determined by the comparator 52, a pulse is issued. Particularly, the skew-adjusted free-running counter 34 output can be used to output a digitally synthesized clock signal at a programmable frequency for telecom systems. PDH/SDH reference frequencies are not integral factors of 125 MHz, thus requiring the counter clock signal to be synthesized using a host processor-programmable event period register 53 programmed with the correct period of the telecom clock signal. The event period register 53 indicates when to issue the clock pulse from a starting point determined by scheduled event register 51. The event period register 53 effectively controls the phase of the signal. Each register utilizes fractional nanoseconds to achieve frequency accuracy for non-integral factors of the 125 MHz system clock (free-running oscillator), as shown in Figure 14 and Figure 15.

A 2.048 MHz (E1) or 1.544 MHz (DS1) reference clock signal is generated by programming the event period register 53 with a value of 488.28125 ns or 647.66839 ns, respectively. The host processor 36 reads the current synchronized time value and subsequently sets the scheduled event register 51 to a point in time in the future where the first clock transition should occur. The clock output logic block issues the output clock signal at the exact time specified by the scheduled event register 51. The event period 53 is then added to the scheduled event register 51 in hardware to specify the next point in time when the clock output should be issued. This process repeats continuously in hardware as illustrated in Figure 14 after initializing the event period register 53 and scheduled event register 51.

It is noted that because of the 8ns quantization steps introduced by the 125 MHz system clock, the digitally synthesized clock signal will have an inherent jitter. If the inherent jitter does not satisfy the end application requirements, an external precision (clean-up) PLL 54 must be used to filter it out as illustrated in Figure 16. The frequency signal can then be conditioned using a clean-up PLL 54 to provide a signal that meets the jitter requirements of the end applications. In addition, various forms of signals (square wave, sine wave, etc.) with interface form factors can be constructed from the raw unclean clock signal. The skew-adjusted free-running counter output (time signal) can also be formatted into various time standard signals.

As in PDH and SDH/SONET networks, two main timing related concerns in a node are *jitter transfer* (or *jitter attenuation*) and *jitter generation* (or *intrinsic jitter*). One of the key requirements (defined by ITU-T G.8262) is the jitter transfer system gain. Jitter transfer is defined as the ratio of input jitter to output jitter in dB. Jitter transfer refers to the magnitude of jitter at the output of a device for a given amount of jitter at the input of the device. Input jitter is applied at various amplitudes and frequencies, and output jitter is measured with various filters depending on the applicable standards. For the Clean-up PLL 54 (Figure 16), the internal low pass loop filter 56 determines the jitter attenuation.

Jitter generation is the jitter created internally by the node itself. Since intrinsic jitter is always present. The majority of this jitter is generated by the PLL 54, power supplies and other components in the individual node. The designer must ensure that each node limits the amount of jitter it generates internally otherwise the jitter from each node will add to the noise in the network and eventually the output clock from the node will not meet the requirements of the intended application.

The Clean-up PLL 54 is designed to have a narrow loop bandwidth and ultra low output jitter (typically less than 0.2 ps). This allows the Clean-up PLL 54 to address the two critical issues of jitter transfer (narrow bandwidth, 6 Hz typical to filter out jitter from the clock recovered from the network), and jitter generation (less than 0.2 ps to limit the jitter injected into the network from the node). These high-performance attributes (low jitter transfer and low jitter generation) of a well-designed Clean-up PLL 54 allows a network to support a large number of cascaded nodes without exceeding the requirements of even the most stringent timing applications. The Clean-up PLL 54 should therefore be selected to meet the exact application requirements.

The systems and methods of the above embodiments may be implemented in a computer system (in particular in computer hardware or in computer software) in addition to the structural components and user interactions described.

The term "computer system" includes the hardware, software and data storage devices for embodying a system or carrying out a method according to the above described embodiments. For example, a computer system may comprise a central processing unit (CPU), input means, output means and data storage. Preferably the computer system has a monitor to provide a visual output display (for example in the design of the business process). The data storage may comprise RAM, disk drives or other computer readable media. The computer system may include a plurality of computing devices connected by a network and able to communicate with each other over that network.

The methods of the above embodiments may be provided as computer programs or as computer program products or computer readable media carrying a computer program which is arranged, when run on a computer, to perform the method(s) described above.

The term "computer readable media" includes, without limitation, any non-transitory medium or media which can be read and accessed directly by a computer or computer system. The media can include, but are not limited to, magnetic storage media such as floppy discs, hard disc storage media and magnetic tape; optical storage media such as optical discs or CD-ROMs; electrical storage media such as memory, including RAM, ROM and flash memory; and hybrids and combinations of the above such as magnetic/optical storage media.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

In particular, although the methods of the above embodiments have been described as being implemented on the systems of the embodiments described, the methods and systems of the present invention need not be implemented in conjunction with each other, but can be implemented on alternative systems or using alternative methods respectively.

### References

[1]. S. B. Moon, P. Skelly and D. Towsley, "Estimation and removal of clock skew from network delay measurements," in Proc. IEEE INFOCOM, vol. 1, pp. 227-234, New York, NY, USA, Mar. 1999.

[2]. P. Skelly, S. B. Moon, D. Towsley, Verizon Laboratories Inc. (2003), *Clock skew estimation and removal,* U.S. Pat. 6661810.

[3]. L. Zhang, Z. Liu and C. H. Xia, "Clock synchronization algorithms for network measurements," in Proc. IEEE INFOCOM, vol. 1, pp. 160-169, Nov. 2002.

[4]. Z. Liu, C. H. Xia, L. Zhang, International Business Machines Corporation (2005), *Clock synchronization with removal of clock skews through network measurements in derivation of a convex hull,* U.S. Pat. 6957357.

[5]. S. M. Carlson, M. H. T. Hack and L. Zhang, International Business Machines Corporation (2010), *Method and system for clock skew and offset estimation,* U.S. Pat. US7688865.

### Claims

1. A slave device (3) connected to a master device (1) having a master clock (4) over a network (2), wherein the slave device includes a slave clock (5), and wherein:
   the slave device is arranged to:

   exchange with the master device, timing messages and record timestamps which are: the time of sending of said timing messages from the master device according to the master clock; the time of receipt of said timing messages according to the slave clock; the time of sending of said timing messages according to the slave clock; and the time of receipt of said timing messages according to the master clock;
   formulate and solve a linear programming problem to derive an estimate of the skew and offset of the slave clock relative to the master clock; and
   synchronize the slave clock to the master clock based on the estimated skew and offset to produce a master time estimate, **characterized in that**:
   the linear programming problem seeks to minimize the expression $\theta_f - \theta_r$ in which $\theta_f$ is the offset of the slave clock compared to the master clock, derived from timing messages sent from the master to the slave and $\theta_r$ is the offset derived from timing messages sent from the slave to the master, subject to the constraints that $T_{1,n}$

$\geq (1 + \alpha)T_{2,n} + \theta_f$, $T_{4,n} \leq (1 + \alpha)T_{3,n} + \theta_r$ and $\theta_f - \theta_r \geq 0$ wherein: $\alpha$ is the skew of the slave clock compared to master clock; $T_{1,n}$ is the time of sending of the nth timing message from the master device according to the master clock; $T_{2,n}$ is the time of receipt of the nth timing message from the master device according to the slave clock; $T_{3,n}$ is the time of sending of the nth timing message from the slave device according to the slave clock; and $T_{4,n}$ is the time of receipt of the nth timing message from the slave device according to the master clock.

2. A slave device (3) according to claim 1 wherein the slave clock includes a local free-running oscillator (31) and a skew-adjusted free-running counter (34) driven by the output of said local free-running oscillator, and the slave device is arranged to synchronize the frequency of the slave clock (5) to the frequency of the master clock (4) by adjusting the skew-adjusted free-running counter to take account of the estimated skew and applying the estimated offset to the output of the skew-adjusted free-running counter to produce the master time estimate.

3. A slave device (3) according to claim 2 wherein the slave device has a memory area (41) storing a signed skew compensation factor derived from said estimate of the skew which is added to the skew-adjusted free-running counter (34) at each clock cycle of the local free-running oscillator (31), wherein the skew compensation factor is preferably an adjustment factor representing a fractional nanosecond adjustment to be applied to the skew-adjusted free-running counter.

4. A slave device (3) according to any one of claims 2 to 3 wherein the skew-adjusted free-running counter (34) is also used to provide timestamps for the time of receipt and of sending of timing messages at/from the slave device and preferably wherein the counter is initialized on receipt by the slave device of the first timing message from the master device (1), and the counter is reset on receipt of the first master time estimate to said first master time estimate.

5. A slave device (3) according to any one of claims 2 to 3 further comprising a second free-running counter (32) driven by the output of the local free-running oscillator (31), wherein the second counter is used to provide timestamps for the time of receipt and sending of timing messages at/from the slave device.

6. A slave device (3) according to any one of claims 2 to 5 wherein the slave device further includes a first programmable register (51) storing scheduled event times and a comparator (52), wherein the comparator is arranged to compare the master time estimate to the event times stored in said register and produce an output signal when there is a match.

7. A slave device (3) according to claim 6 wherein the slave device includes a second programmable register (53) storing an event period and is arranged to produce a pulsed output signal by incrementing a scheduled event time stored in said first programmable register (51) by the event period stored in said second programmable register each time a match is found by the comparator (52), and preferably wherein the pulsed output of the comparator is conditioned using a phase locked loop (54) to reduce the jitter in the output.

8. A method of synchronizing the time and frequency of a slave clock (5) in a slave device (3) to a master clock (4) in a master device (1) which is connected to the slave device over a network (2), the method including the steps of:

   exchanging, between the master device and the slave device, timing messages and timestamps which are: the time of sending of timing messages from the master device according to the master clock; the time of receipt of said timing messages according to the slave clock; the time of sending of said timing messages according to the slave clock; and the time of receipt of said timing messages according to the master clock;
   formulating and solving a linear programming problem to derive an estimate of the skew and offset of the slave clock relative to the master clock; and
   synchronizing the slave clock to the master clock based on the estimated skew and offset to produce a master time estimate, **characterized in that**:
   the linear programming problem seeks to minimize the expression $\theta_f - \theta_r$ in which $\theta_f$ is the offset of the slave clock compared to the master clock, derived from timing messages sent from the master to the slave and $\theta_r$ is the offset derived from timing messages sent from the slave to the master, subject to the constraints that $T_{1,n} \geq (1 + \alpha)T_{2,n} + \theta_f$, $T_{4,n} \leq (1 + \alpha)T_{3,n} + \theta_r$ and $\theta_f - \theta_r \geq 0$ wherein: $\alpha$ is the skew of the slave clock compared to master clock; $T_{1,n}$ is the time of sending of the nth timing message from the master device according to the master clock; $T_{2,n}$ is the time of receipt of the nth timing message from the master device according to the slave clock; $T_{3,n}$ is the time of sending of the nth timing message from the slave device according to the slave clock; and $T_{4,n}$ is the time of receipt of the nth timing message from the slave device according to the master clock.

9. A method according to claim 8 wherein the slave clock (5) includes a local free-running oscillator (31) and a skew-adjusted free-running counter (34) driven by the output of said local free-running oscillator, and the step of synchronizing includes the steps of:

> synchronizing the frequency of the slave clock (5) to the frequency of the master clock (4) by adjusting the skew-adjusted free-running counter (34) to take account of the estimated skew and
> applying the estimated offset to the output of the skew-adjusted free-running counter to produce the master time estimate.

**10.** A method according to claim 9 further including the steps of:

> storing a signed skew compensation factor derived from said estimate of the skew in a memory area (41); and
> adding said compensation factor to the skew-adjusted free-running counter (34) at each clock cycle of the local free-running oscillator (31), wherein the skew compensation factor is preferably an adjustment factor representing a fractional nanosecond adjustment to be applied to the skew-adjusted free-running counter.

**11.** A method according to any one of claims 9 to 10 wherein the skew-adjusted free-running counter (34) is also used to provide timestamps for the time of receipt and of sending of timing messages at/from the slave device (3), the method preferably further including the steps of:

> initializing the counter on receipt by the slave device of the first timing message from the master device (1), and resetting the counter to said first master time estimate on receipt of the first master time estimate.

**12.** A method according to any one of claims 9 to 10 wherein the slave device (3) further comprises a second free-running counter (32) driven by the output of the local free-running oscillator (31), and the second counter is used to provide timestamps for the time of receipt and sending of timing messages at/from the slave device.

**13.** A method according to any one of claims 9 to 12 wherein the slave device (3) further includes a first programmable register (51) storing scheduled event times and the method further includes the steps of:

> comparing the master time estimate to the event times stored in said register; and
> producing an output signal when there is a match.

**14.** A method according to claim 13 wherein the slave device (3) includes a second programmable register (53) storing an event period and the method further includes the step of incrementing a scheduled event time stored in said first programmable register (51) by the event period stored in said second programmable register each time a match is found by the comparator to produce a pulsed output signal, and preferably the step of conditioning the pulsed output of the comparator using a phase locked loop to reduce the jitter in the output.

**15.** A time and frequency synchronisation system for a network, the system including:

> a master device (1) having a master clock (4);
> a slave device (3) having a slave clock (5); and
> a network (2) connecting the master and slave devices,

wherein:
the slave device is a slave device according to any one of claims 1 to 7.

**Patentansprüche**

**1.** Slave-Gerät (3), das mit einem Master-Gerät (1) mit einer Master-Uhr (4) über ein Netzwerk (2) verbunden ist, wobei das Slave-Gerät eine Slave-Uhr (5) beinhaltet und wobei:
das Slave-Gerät angeordnet ist, um:

> mit dem Master-Gerät Zeitpunktnachrichten auszutauschen und Zeitstempel aufzuzeichnen, die sind: die Zeit des Sendens der Zeitpunktnachrichten vom Master-Gerät gemäß der Master-Uhr; die Zeit des Empfangs der Zeitpunktnachrichten gemäß der Slave-Uhr; die Sendezeit der Zeitpunktnachrichten gemäß der Slave-Uhr; und die Zeit des Empfangs der Zeitpunktnachrichten gemäß der Master-Uhr;

ein lineares Programmierproblem zu formulieren und zu lösen, um eine Schätzung des Versatzes und des Offsets der Slave-Uhr relativ zur Master-Uhr abzuleiten; und

die Slave-Uhr mit der Master-Uhr basierend auf dem geschätzten Versatz und Offset zu synchronisieren, um eine Master-Zeitschätzung zu erzeugen, **dadurch gekennzeichnet, dass**:

das lineare Programmierungsprogramm danach strebt, den Ausdruck $\theta_f$ - $\theta_r$ zu minimieren, in dem $\theta_f$ der Offset der Slave-Uhr verglichen mit der Master-Uhr ist, abgeleitet von Zeitpunktmessungen, die vom Master zum Slave gesendet werden und $\theta_r$ der Offset ist, abgeleitet von Zeitpunktmessungen, die vom Slave zum Master gesendet werden, vorbehaltlich der Einschränkungen, dass $T_{1,n} \geq (1+\alpha)T_{2,n} + \theta_f$, $T_{4,n} \leq (1+\alpha)T_{3,n} + \theta_r$ and $\theta_f$ - $\theta_r \geq \theta$ wobei: $\alpha$ der Versatz der Slave-Uhr verglichen mit der Master-Uhr ist; $T_{1,n}$ die Zeit des Sendens der nten Zeitpunktnachricht von dem Master-Gerät gemäß der Master-Uhr ist; $T_{2,n}$ die Zeit des Empfangs der nten Zeitpunktmessung von dem Master-Gerät gemäß der Slave-Uhr ist; $T_{3,n}$ die Zeit des Sendens der nten Zeitpunktmessung von dem Slave-Gerät gemäß der Slave-Uhr ist; und $T_{4,n}$ die Zeit des Empfangs der nten Zeitpunktnachricht von dem Slave-Gerät gemäß der Master-Uhr ist.

2. Slave-Gerät (3) nach Anspruch 1, wobei die Slave-Uhr einen lokalen freilaufenden Oszillator (31) und einen durch den Ausgang des lokalen freilaufenden Oszillators angesteuerten versetzt eingestellten freilaufenden Zähler (34) beinhaltet, und das Slave-Gerät angeordnet ist, umdie Frequenz der Slave-Uhr (5) mit der Frequenz der Master-Uhr (4) zu synchronisieren, indem der versetzt eingestellte freilaufende Zähler eingestellt wird, um den geschätzten Versatz zu berücksichtigen und den geschätzten Versatz auf den Ausgang des versetzt eingestellten freilaufenden Zählers anzuwenden, um die Masterzeitschätzung zu erzeugen.

3. Slave-Gerät (3) nach Anspruch 2, wobei das Slave-Gerät einen Speicherbereich (41) aufweist, der einen vorzeichenbehafteten Versatzkompensationsfaktor speichert, der aus der Schätzung des Versatzes abgeleitet ist, der dem versetzt eingestellten freilaufenden Zähler (34) bei jedem Taktzyklus des lokalen freilaufenden Oszillators (31) hinzugefügt wird, wobei der Versatzkompensationsfaktor vorzugsweise Einstellungsfaktor ist, der eine fraktionale Nanosekundeneinstellung darstellt, die auf den versetzt eingestellten freilaufende Zähler angewandt werden soll.

4. Slave-Gerät (3) nach einem der Ansprüche 2 bis 3, wobei der schräg eingestellte freilaufende Zähler (34) auch verwendet wird, um Zeitstempel für die Zeit des Empfangs und des Sendens von Zeitpunktnachrichten an das/von dem Slave-Gerät bereitzustellen und vorzugsweise wobei der Zähler beim Empfang der ersten Zeitpunktnachricht von dem Master-Gerät (1) durch das Slave-Gerät eingeleitet wird und der Zähler beim Empfang der ersten Master-Zeitschätzung auf die erste Master-Zeitschätzung zurückgesetzt wird.

5. Slave-Gerät (3) nach einem der Ansprüche 2 bis 3, ferner umfassend einen zweiten freilaufenden Zähler (32), der vom Ausgang des lokalen freilaufenden Oszillators (31) angesteuert wird, wobei der zweite Zähler zum Bereitstellen von Zeitstempeln für die Zeit des Empfangs und des Sendens von Zeitpunktnachrichten an das/vom Slave-Gerät verwendet wird.

6. Slave-Gerät (3) nach einem der Ansprüche 2 bis 5, wobei das Slave-Gerät ferner ein erstes programmierbares Register (51), das geplante Ereigniszeiten speichert, und einen Komparator (52) beinhaltet, wobei der Komparator angeordnet ist, um die Master-Zeitschätzung mit zu den in dem Register gespeicherten Ereigniszeiten zu vergleichen und ein Ausgangssignal zu erzeugen, wenn eine Übereinstimmung vorliegt.

7. Slave-Gerät (3) nach Anspruch 6, wobei das Slave-Gerät ein zweites programmierbares Register (53) beinhaltet, das eine Ereignisdauer speichert, und angeordnet ist, um ein gepulstes Ausgangssignal durch Inkrementieren einer geplanten Ereigniszeit zu erzeugen, die in dem ersten programmierbaren Register (51) gespeichert ist, durch die Ereignisdauer, die in dem zweiten programmierbaren Register jedes Mal gespeichert wird, wenn eine Übereinstimmung vom Komparator (52) gefunden wird, und vorzugsweise wobei der gepulste Ausgang des Komparators unter Verwendung einer Phasenregelschleife (54) konditioniert wird, um den Jitter im Ausgang zu verringern.

8. Verfahren zum Synchronisieren der Zeit und Frequenz einer Slave-Uhr (5) in einem Slave-Gerät (3) mit einer Master-Uhr (4) in einem Master-Gerät (1), das über ein Netzwerk (2) mit dem Slave-Gerät verbunden ist, das Verfahren beinhaltend die folgenden Schritte:

zwischen dem Master-Gerät und dem Slave-Gerät Zeitpunktnachrichten und Zeitstempel auszutauschen, die sind: die Zeit des Sendens der Zeitpunktnachrichten vom Master-Gerät gemäß der Master-Uhr; die Zeit des Empfangs der Zeitpunktnachrichten gemäß der Slave-Uhr; die Sendezeit der Zeitpunktnachrichten gemäß der Slave-Uhr; und die Zeit des Empfangs der Zeitpunktnachrichten gemäß der Master-Uhr;

ein lineares Programmierproblem zu formulieren und zu lösen, um eine Schätzung des Versatzes und des Offsets der Slave-Uhr relativ zur Master-Uhr abzuleiten; und

die Slave-Uhr mit der Master-Uhr basierend auf dem geschätzten Versatz und Offset zu synchronisieren, um eine Master-Zeitschätzung zu erzeugen, **dadurch gekennzeichnet, dass**:

das lineare Programmierungsprogramm danach strebt, den Ausdruck $\theta_f - \theta_r$ zu minimieren, in dem $\theta_f$ der Offset der Slave-Uhr verglichen mit der Master-Uhr ist, abgeleitet von Zeitpunktmessungen, die vom Master zum Slave gesendet werden und $\theta_r$ der Offset ist, abgeleitet von Zeitpunktmessungen, die vom Slave zum Master gesendet werden, vorbehaltlich der Einschränkungen, dass $T_{1,n} \geq (1+\alpha)T_{2,n} + \theta_f$, $T_{4,n} \leq (1+\alpha)T_{3,n} + \theta_r$ and $\theta_f - \theta_r \geq \theta$ wobei: $\alpha$ der Versatz der Slave-Uhr verglichen mit der Master-Uhr ist; $T_{1,n}$ die Zeit des Sendens der nten Zeitpunktnachricht von dem Master-Gerät gemäß der Master-Uhr ist; $T_{2,n}$ die Zeit des Empfangs der nten Zeitpunktmessung von dem Master-Gerät gemäß der Slave-Uhr ist; $T_{3,n}$ die Zeit des Sendens der nten Zeitpunktmessung von dem Slave-Gerät gemäß der Slave-Uhr ist; und $T_{4,n}$ die Zeit des Empfangs der nten Zeitpunktnachricht von dem Slave-Gerät gemäß der Master-Uhr ist.

9. Verfahren nach Anspruch 8, wobei die Slave-Uhr (5) einen lokalen freilaufenden Oszillator (31) und einen durch den Ausgang des lokalen freilaufenden Oszillators angetriebenen versetzt eingestellten freilaufenden Zähler (34) beinhaltet, und der Schritt des Synchronisierens die folgenden Schritte beinhaltet:

Synchronisieren der Frequenz der Slave-Uhr (5) mit der Frequenz der Master-Uhr (4) durch Einstellen des versetzt eingestellten freilaufenden Zählers (34) zur Berücksichtigung des geschätzten Versatzes und Anwenden des geschätzten Offsets auf den Ausgang des versetzt eingestellten freilaufenden Zählers, um die Masterzeitschätzung zu erzeugen.

10. Verfahren nach Anspruch 9, ferner beinhaltend die Schritte:

Speichern eines vorzeichenbehafteten Versatzkompensationsfaktors, der aus der Schätzung des Versatzes in einem Speicherbereich (41) abgeleitet ist; und

Hinzufügen des Kompensationsfaktors zu dem versetzt eingestellten freilaufenden Zähler (34) bei jedem Taktzyklus des lokalen freilaufenden Oszillators (31), wobei der Versatzkompensationsfaktor vorzugsweise ein Einstellungsfaktor ist, der eine fraktionale Nanosekundeneinstellung darstellt, die auf den versetzt eingestellten freilaufende Zähler angewandt werden soll.

11. Verfahren nach einem der Ansprüche 9 bis 10, wobei der versetzt eingestellte freilaufende Zähler (34) auch verwendet wird, um Zeitstempel für die Zeit des Empfangs und des Sendens von Zeitpunktnachrichten an/von dem Slave-Gerät (3) bereitzustellen, wobei das Verfahren vorzugsweise ferner die folgenden Schritte umfasst:

Einleiten des Zählers beim Empfang der ersten Zeitplanungs-Nachricht vom Master-Gerät (1) durch das Slave-Gerät und

Zurücksetzen des Zählers auf die erste Master-Zeitschätzung nach Empfang der ersten Master-Zeitschätzung.

12. Verfahren nach einem der Ansprüche 9 bis 10, wobei das Slave-Gerät (3) ferner umfassend einen zweiten freilaufenden Zähler (32), der vom Ausgang des lokalen freilaufenden Oszillators (31) angesteuert wird, und der zweite Zähler zum Bereitstellen von Zeitstempeln für die Zeit des Empfangs und des Sendens von Zeitpunktnachrichten an das/vom Slave-Gerät verwendet wird.

13. Verfahren nach einem der Ansprüche 9 bis 12, wobei das Slave-Gerät (3) ferner ein erstes programmierbares Register (51) beinhaltet, das geplante Ereigniszeiten speichert, und das Verfahren ferner die folgenden Schritte beinhaltet:

Vergleichen der Masterzeitschätzung mit den in dem Register gespeicherten Ereigniszeiten; und

Erzeugen eines Ausgangssignals, wenn eine Übereinstimmung vorliegt.

14. Verfahren nach Anspruch 13, wobei das Slave-Gerät (3) ein zweites programmierbares Register (53) beinhaltet, das eine Ereignisdauer speichert, und das Verfahren ferner den Schritt des Inkrementierens einer geplanten Ereigniszeit enthält, die in dem ersten programmierbaren Register (51) durch die Ereignisdauer, die in dem zweiten programmierbaren Register jedes Mal gespeichert wird, wenn eine Übereinstimmung von dem Komparator gefunden wird, um ein gepulstes Ausgangssignal zu erzeugen, und vorzugsweise den Schritt des Konditionierens des gepulsten Ausgangs des Komparators unter Verwendung einer Phasenregelschleife, um den Jitter im Ausgang zu verringern.

15. Ein Zeit- und Frequenzsynchronisationssystem für ein Netzwerk, das System beinhaltend:

ein Master-Gerät (1) mit einer Master-Uhr (4);
ein Slave-Gerät (3) mit einer Slave-Uhr (5); und
ein Netzwerk (2), das die Master- und Slave-Geräte verbindet, wobei:
das Slave-Gerät ein Slave-Gerät nach einem der Ansprüche 1 bis 7 ist.

## Revendications

1. Dispositif esclave (3) connecté à un dispositif maître (1) ayant une horloge maîtresse (4) sur un réseau (2), le dispositif esclave incluant une horloge esclave (5), et :
   le dispositif esclave étant agencé pour :

   échanger avec le dispositif maître des messages de minutage et enregistrer des estampilles temporelles qui sont : le moment d'envoi desdits messages de minutage depuis le dispositif maître selon l'horloge maîtresse ; le moment de réception desdits messages de minutage selon l'horloge esclave ; le moment d'envoi desdits messages de minutage selon l'horloge esclave ; et le moment de réception desdits messages de minutage selon l'horloge maîtresse ;
   formuler et résoudre un problème de programmation linéaire pour dériver une estimation de l'asymétrie et du décalage de l'horloge esclave par rapport à l'horloge maîtresse ; et
   synchroniser l'horloge esclave sur l'horloge maîtresse sur la base de l'asymétrie et du décalage estimés pour produire une estimation temporelle maîtresse, **caractérisé en ce que** :
   le problème de programmation linéaire cherche à minimiser l'expression $\theta_f - \theta_r$ dans laquelle $\theta_f$ est le décalage de l'horloge esclave en comparaison avec l'horloge maîtresse, dérivé de messages de minutage envoyés du maître à l'esclave et $\theta_r$ est le décalage dérivé de messages de minutage envoyés de l'esclave au maître, sous réserve que $T_{1,n} \geq (1+\alpha)T_{2,n} + \theta_f$, $T_{4,n} \leq (1+\alpha)T_{3,n} + \theta_r$ et $\theta_f - \theta_r \geq \theta$ où : $\alpha$ est l'asymétrie de l'horloge esclave en comparaison avec l'horloge maîtresse ; $T_{1,n}$ est le moment d'envoi du ne message de minutage depuis le dispositif maître selon l'horloge maîtresse ; $T_{2,n}$ est le moment de réception du ne message de minutage depuis le dispositif maître selon l'horloge esclave ; $T_{3,n}$ est le moment d'envoi du ne message de minutage depuis le dispositif esclave selon l'horloge esclave ; et $T_{4,n}$ est le moment de réception du ne message de minutage depuis le dispositif esclave selon l'horloge maîtresse.

2. Dispositif esclave (3) selon la revendication 1, dans lequel l'horloge esclave comprend un oscillateur local non asservi (31) et un compteur non asservi ajusté en asymétrie (34) entraîné par la sortie dudit oscillateur local non asservi, et le dispositif esclave est agencé pour synchroniser la fréquence de l'horloge esclave (5) sur la fréquence de l'horloge maîtresse (4) par ajustement du compteur non asservi ajusté en asymétrie pour tenir compte de l'asymétrie estimée, et appliquer le décalage estimé à la sortie du compteur non asservi ajusté en asymétrie pour produire l'estimation temporelle maîtresse.

3. Dispositif esclave (3) selon la revendication 2, le dispositif esclave ayant une zone de mémoire (41) stockant un facteur de compensation d'asymétrie dérivé de ladite estimation de l'asymétrie qui est ajoutée au compteur non asservi ajusté en asymétrie (34) à chaque cycle d'horloge de l'oscillateur local non asservi (31), le facteur de compensation d'asymétrie étant de préférence un facteur d'ajustement représentant un ajustement fractionnel à l'échelle de la nanoseconde à appliquer au compteur non asservi ajusté en asymétrie.

4. Dispositif esclave (3) selon l'une quelconque des revendications 2 à 3, dans lequel le compteur non asservi ajusté en asymétrie (34) est également utilisé pour fournir des estampilles temporelles pour le moment de réception et d'envoi de messages de minutage au niveau/en provenance du dispositif esclave et de préférence dans lequel le compteur est initialisé lors de la réception par le dispositif esclave du premier message de minutage depuis le dispositif maître (1), et le compteur est réinitialisé lors de la réception de la première estimation temporelle maîtresse à ladite première estimation temporelle maîtresse.

5. Dispositif esclave (3) selon l'une quelconque des revendications 2 à 3, comprenant en outre un deuxième compteur non asservi (32) entraîné par la sortie de l'oscillateur local non asservi (31), le deuxième compteur étant utilisé pour fournir des estampilles temporelles pour le moment de réception et d'envoi de messages de minutage au niveau/en provenance du dispositif esclave.

6. Dispositif esclave (3) selon l'une quelconque des revendications 2 à 5, le dispositif esclave comprenant en outre un premier registre programmable (51) stockant des moments d'événements planifiés et un comparateur (52), le comparateur étant agencé pour comparer l'estimation temporelle maîtresse aux moments d'événements planifiés stockés dans ledit registre et produire un signal de sortie en cas de correspondance.

7. Dispositif esclave (3) selon la revendication 6, le dispositif esclave comprenant un deuxième registre programmable (53) stockant une période d'événement et étant agencé pour produire un signal de sortie à impulsion par incrémentation d'un moment d'événement planifié stocké dans ledit premier registre programmable (51) de la période d'événement stockée dans ledit deuxième registre programmable chaque fois qu'une correspondance est trouvée par le comparateur (52), et la sortie à impulsion du comparateur étant de préférence conditionnée à l'aide d'une boucle d'asservissement de phase (54) afin de réduire l'instabilité dans la sortie.

8. Procédé de synchronisation du temps et de la fréquence d'un horloge esclave (5) dans un dispositif esclave (3) sur une horloge maîtresse (4) dans un dispositif maître (1) qui est connecté au dispositif esclave sur un réseau (2), le procédé comprenant les étapes consistant à :

échanger, entre le dispositif maître et le dispositif esclave, des messages de minutage et des estampilles temporelles d'enregistrement qui sont : le moment d'envoi desdits messages de minutage depuis le dispositif maître selon l'horloge maîtresse ; le moment de réception desdits messages de minutage selon l'horloge esclave ; le moment d'envoi desdits messages de minutage selon l'horloge esclave ; et le moment de réception desdits messages de minutage selon l'horloge maîtresse ;

formuler et résoudre un problème de programmation linéaire pour dériver une estimation de l'asymétrie et du décalage de l'horloge esclave par rapport à l'horloge maîtresse ; et

synchroniser l'horloge esclave sur l'horloge maîtresse sur la base de l'asymétrie et du décalage estimés pour produire une estimation temporelle maîtresse, **caractérisé en ce que** :

le problème de programmation linéaire cherche à minimiser l'expression $\theta_f - \theta_r$ dans laquelle $\theta_f$ est le décalage de l'horloge esclave en comparaison avec l'horloge maîtresse, dérivé de messages de minutage envoyés du maître à l'esclave et $\theta_r$ est le décalage dérivé de messages de minutage envoyés de l'esclave au maître, sous réserve que $T_{1,n} \geq (1 + \alpha)T_{2,n} + \theta_f$, $T_{4,n} \leq (1 + \alpha)T_{3,n} + \theta_r$ et $\theta_f - \theta_r \geq \theta$ où : $\alpha$ est l'asymétrie de l'horloge esclave en comparaison avec l'horloge maîtresse ; $T_{1,n}$ est le moment d'envoi du ne message de minutage depuis le dispositif maître selon l'horloge maîtresse ; $T_{2,n}$ est le moment de réception du ne message de minutage depuis le dispositif maître selon l'horloge esclave ; $T_{3,n}$ est le moment d'envoi du ne message de minutage depuis le dispositif esclave selon l'horloge esclave ; et $T_{4,n}$ est le moment de réception du ne message de minutage depuis le dispositif esclave selon l'horloge maîtresse.

9. Procédé selon la revendication 8, dans lequel l'horloge esclave (5) comprend un oscillateur local non asservi (31) et un compteur non asservi ajusté en asymétrie (34) entraîné par la sortie dudit oscillateur local non asservi, et l'étape de synchronisation comprend les étapes consistant à :

synchroniser la fréquence de l'horloge esclave (5) sur la fréquence de l'horloge maîtresse (4) par ajustement du compteur non asservi ajusté en asymétrie (34) pour tenir compte de l'asymétrie estimée, et

appliquer le décalage estimé à la sortie du compteur non asservi ajusté en asymétrie pour produire l'estimation temporelle maîtresse.

10. Procédé selon la revendication 9, comprenant en outre les étapes consistant à :

stocker un facteur de compensation d'asymétrie signé dérivé de ladite estimation de l'asymétrie dans une zone de mémoire (41) ; et

l'addition dudit facteur de compensation au compteur non asservi ajusté en asymétrie (34) à chaque cycle d'horloge de l'oscillateur local non asservi (31), le facteur de compensation d'asymétrie étant de préférence un facteur d'ajustement représentant un ajustement fractionnel à l'échelle de la nanoseconde à appliquer au compteur non asservi ajusté en asymétrie.

11. Procédé selon l'une quelconque des revendications 9 à 10, dans lequel le compteur non asservi ajusté en asymétrie (34) est également utilisé pour fournir des estampilles temporelles pour le moment de réception et d'envoi de messages de minutage au niveau/en provenance du dispositif esclave (3), le procédé comprenant en outre de préférence les étapes consistant à :

initialiser le compteur lors de la réception par le dispositif esclave du premier message de minutage depuis le dispositif maître (1), et

la réinitialisation du compteur à ladite estimation temporelle maîtresse lors de la réception de la première estimation temporelle maîtresse.

12. Procédé selon l'une quelconque des revendications 9 à 10, dans lequel le dispositif esclave (3) comprend en outre un deuxième compteur non asservi (32) entraîné par la sortie de l'oscillateur local non asservi (31), et le deuxième compteur est utilisé pour fournir des estampilles temporelles pour le moment de réception et d'envoi de messages de minutage au niveau/en provenance du dispositif esclave.

13. Procédé selon l'une quelconque des revendications 9 à 12, dans lequel le dispositif esclave (3) comprend en outre un premier registre programmable (51) stockant des moments d'événements planifiés et le procédé comprenant en outre les étapes consistant à :

comparer l'estimation temporelle maîtresse aux moments d'événements stockés dans ledit registre ; et produire un signal de sortie en cas de correspondance.

14. Procédé selon la revendication 13, dans lequel le dispositif esclave (3) comprend un deuxième registre programmable (53) stockant une période d'événement et le procédé comprenant en outre l'étape consistant à incrémenter un moment d'événement planifié stocké dans ledit premier registre programmable (51) de la période d'événement stockée dans ledit deuxième registre programmable chaque fois qu'une correspondance est trouvée par le comparateur pour produire un signal de sortie à impulsion, et l'étape de conditionnement de la sortie à impulsion du comparateur utilisant de préférence une boucle d'asservissement de phase afin de réduire l'instabilité dans la sortie.

15. Système de synchronisation en temps et en fréquence pour un réseau, le système comprenant :

un dispositif maître (1) ayant une horloge maîtresse (4) ;
un dispositif esclave (3) ayant une horloge esclave (5) ; et
un réseau (2) connectant les dispositifs maître et esclave, dans lequel :
le dispositif esclave est un dispositif esclave selon l'une quelconque des revendications 1 à 7.

FIG. 1

Clock Reference

Recovered Time

Equipment without IEEE
1588 PTP Capabilities

PTP Messages

6

PTP
Master

PTP
Slave

6

Ethernet
Network

2

1

4

5

FIG. 2

EP 3 080 933 B1

2

PTP Message Stream
With Packet Delay
Variations

1

3

PTP Master

PTP Message Stream

Packet
Network

PTP Slave

Reconstructed
Clock

Packet Delay
Variation

FIG. 3

PTP Master:
PTP Messages
Transmitted
at Link rate

Packet Delay
Variation (PDV)

PTP Message
at PTP Slave

## FIG. 4

Master (Server) Time $\qquad$ $S(t) = (1+\alpha)C(t)$
$S(t)$

$\alpha = 0$

$\alpha > 0$

Slave
Slower

$\alpha < 0$

Slave
Faster

0

$C(t)$
Slave (Client) Time

Clock with no Offset

Master (Server) Time $\qquad$ $S(t) = (1+\alpha)C(t)+\theta$
$S(t)$

$\alpha = 0$

$\alpha > 0$

Slave
Slower

$\alpha < 0$

Slave
Faster

$\theta$

0

$C(t)$
Slave (Client) Time

Clock with Offset

## FIG. 5

Slave with Non-zero
Offset, Zero Skew

Slave with Non-zero
Offset, Non-zero Skew

FIG. 6

FIG. 7

$y \geq (1+\alpha)x+\theta_f$

$y \leq (1+\alpha)x+\theta_r$

Master
(Server)
Time

$\theta = \dfrac{\theta_f+\theta_r}{2}$

$\theta_f$

$\theta_r$

0

Slave (Client) Time

$x$

FIG. 8

Skew-Adjusted
Local Clock

Local Clock

Estimated Server
Time

$C$

$\times$

$+$

$\hat{S}$

$(1+\hat{\alpha})$

$\hat{\theta}$

Offset-Adjusted
Local Clock

FIG. 9

FIG. 10

**FIG. 11**

Local Free-Running Oscillator

31

$L_{clock} = C$

41 Skew Compensation Factor (CPU Programmable)

| Sign | Fractional Nanoseconds[31:0] |

The magnitude and sign of a (direction of skew correction) is computed by the server time estimation algorithm

$\hat{a}C$

Skew Adjusted Free-Running Counter

| Seconds[47:0] | Nanoseconds[31:0] | Fractional Nanoseconds[31:0] |

Carry

+/- Carry

34

$(1+\hat{a})C$

$\theta$

Time Offset (CPU Programmable)

| Sign | Seconds[47:0] | Nanoseconds[31:0] |

$\hat{S}=(1+\hat{a})C+\theta$
Synchronized Local Time

**FIG. 11**

41 Skew Compensation Factor (CPU Programmable)

| Sign | Fractional Nanoseconds[31:0] |

Local Free-Running Oscillator

31

$\tau_{LO}$

$\hat{a}\tau_{LO}$

Skew Adjusted Free-Running Counter

| Seconds[47:0] | Nanoseconds[31:0] | Fractional Nanoseconds[31:0] |

34

Carry

+/- Carry

$\tau_{skew\_adjusted}(i) = \tau_{LO} + \hat{a}(i).\tau_{LO}, \quad i=1,2,...,n$

$C_{skew\_adjusted}(n) = \sum_{i=1}^{n} \tau_{skew\_adjusted}(i)$

$= n\tau_{LO} + \tau_{LO}\sum_{i=1}^{n} \hat{a}(i)$

$=C(n) + Corr(n)$

**FIG. 12**

Timestamp

Slave Clock incremented
by 8 ns ± a skew
compensation factor
at each clock tick

Master Clock
Time Base

8 ns

5 ns

Slave Clock is
incremented by 8 ns ±
a fractional ns skew
defined term such that it
follows the Master Clock

Master Clock incremented
by 5 ns ± at each clock tick

5 ns

8 ns

Time

Master Clock Period

Nominal Slave Clock Period

FIG. 13

Programmable
Event Time

Scheduled Event
Time Register ⌐51

Comparator

52⌐

Pulse Signal at Precise
Time Specified by
Application or Precise
Pulse Train Signal

Programmable
Offset and
Skew Adjustments

Skew-Adjusted
Free-Running Counter
with Offset Correction ⌐34

Local
Free-Running
Oscillator

~ ⌐31

FIG. 14

Programmable Event Period

53 — | Nanosecond | Fractional Nanosecond |

51

Programmable Scheduled Event Time →

| Second | Nanosecond | Fractional Nanosecond |

52 — Comparator

→ Pulse Signal at Precise Time Specified by Application or Precise Pulse Train Signal

Programmable Offset and Skew Adjustments →

Skew-Adjusted Free-Running Counter with Offset Correction — 34

Local Free-Running Oscillator

~ — 31

FIG. 15

Programmable Event Period

53 — | Nanosecond | Fractional Nanosecond |

51

Programmable Scheduled Event Time →

| Second | Nanosecond | Fractional Nanosecond |

52 — Comparator

Precise Pulse Train Signal

Clean-Up-PLL

| Phase Detector | Loop Filter | Oscillator | →

54        56

Programmable Offset and Skew Adjustments →

Skew-Adjusted Free-Running Counter with Offset Correction — 34

Local Free-Running Oscillator

~ — 31

FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6661810 B
- US 6957357 B
- US 7688865 B

**Non-patent literature cited in the description**

- **BLETSAS A.** Evaluation of Kalman filtering for network time keeping. *IEEE Transactions on Ultrasonics, Ferroelectrics and Frequency Control,* vol. 52 (9), 1452-1460

- **S. B. MOON ; P. SKELLY ; D. TOWSLEY.** Estimation and removal of clock skew from network delay measurements. *Proc. IEEE INFOCOM,* March 1999, vol. 1, 227-234
- **L. ZHANG ; Z. LIU ; C. H. XIA.** Clock synchronization algorithms for network measurements. *Proc. IEEE INFOCOM,* November 2002, vol. 1, 160-169